# EUROPEAN PATENT APPLICATION

(11) **EP 3 661 333 A1**
(43) Date of publication of application: **03.06.2020**
(21) Application number: 19211616.8
(22) Date of filing: 26.11.2019
(51) Int. Cl.: H05B 47/18

(54) **METHOD FOR LAMP POSITION MAPPING**

(30) Priority: 28.11.2018 CN 201811434085
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: Dai, Jiayun, Ningbo 315103 (CN); Zhang, Jian, Ningbo 315103 (CN)
(74) Representative: 2K Patentanwälte Blasberg Kewitz & Reichel

(57) **Abstract**

The invention discloses a method for lamp position mapping, comprising:S1: make a layout diagram of lamps according to the actual position of each lamp;S2: selecting a lamp to make the status of the lamp different from other lamps, determining the corresponding position of the lamp in the layout diagram by observing the actual position of the lamp, and then selecting the corresponding position of the lamp in the layout diagram, and establishing a corresponding relationship between the lamp and the corresponding position in the layout diagram;S3: operating all the remaining lamps one by one according to the method of S2, so as to establish a corresponding relationship between each lamp and the corresponding position in the layout diagram. The invention can intuitively select the corresponding lamp in the layout diagram according to the position of the lamp in reality, so that the selection of the lamp is convenient.

## Description

### RELATED APPLICATION

this application claims priority to a Chinese Patent Application No. CN 201811434085.9, filed on November 28, 2018.

### FIELD OF THE TECHNOLOGY

the present invention relates to lighting field, with particular emphasis on a method for lamp position mapping.

### BACKGROUND OF THE INVENTION

The DALI standard protocol is a protocol for controlling lighting. It can control grouping, scene control, and panel and sensor control. However, there are some unintuitive shortcomings when using these control methods. For example, when grouping control, you do not know the specific lamps controlled by grouping, you need to observe the surrounding while controlling, in order to know the specific lamps which are controlled.

the current common solution is to display all the lamps through software, and then display the lamps selected by the current group. This method allows the user to name each lamp, but need to remember the position of the lamp corresponding to each name. Once the number of lamps in the system is large, it is difficult to remember the position of the lamps corresponding to each name, and it is a bit difficult to name each lamp with different names, because if the positions or functions of the two lamps are similar, their names will be similar, which makes it difficult to determine the position of the lamp by name.

### BRIEF SUMMARY OF THE INVENTION

In view of this, it is necessary to provide a method for lamp position mapping to overcome the above disadvantages.

A method for lamp position mapping, comprising:
S1: make a layout diagram of lamps according to the actual position of each lamp;
S2: selecting a lamp to make the status of the lamp different from other lamps, determining the corresponding position of the lamp in the layout diagram by observing the actual position of the lamp, and then selecting the corresponding position of the lamp in the layout diagram, and establishing a corresponding relationship between the lamp and the corresponding position in the layout diagram;
S3: operating all the remaining lamps one by one according to the method of S2, so as to establish a corresponding relationship between each lamp and the corresponding position in the layout diagram.
   advantageously, the process of establishing a corresponding relationship between the lamp and the corresponding position in the layout diagram is as follows:
   obtaining the DALI address of each lamp, and after selecting a lamp, obtaining the DALI address of the selected lamp;
   establishing a coordinate system in the layout diagram, and selecting a corresponding position of the lamp in the layout diagram, and obtaining coordinate values of the selected corresponding position;
   establishing a corresponding relationship between the DALI address of the selected lamp and the coordinate value of the corresponding position of the lamp in the layout diagram.
   advantageously, the lamp is flashed when a lamp is selected.

Compared with the prior art, the present invention can map the actual position of the lamp to the layout diagram, so that the position distribution of the lamp in the layout diagram is exactly the same as the position distribution of the lamp in reality. When a certain lamp or a group of lamps need to be controlled, the position of lamps in the layout diagram can be obtained by correspondingly map the actual position of lamps in reality to the layout. And then the corresponding lamp is selected in the layout diagram to set and control the lamp, so that the present invention can intuitively choose the corresponding lamps in the layout diagram according to the position of lamps in reality, making the selection of lamps more convenient.

### BRIEF DESCRIPTION OF THE DRAWINGS

the drawings described herein are intended to promote a further understanding of the present invention, as follows:

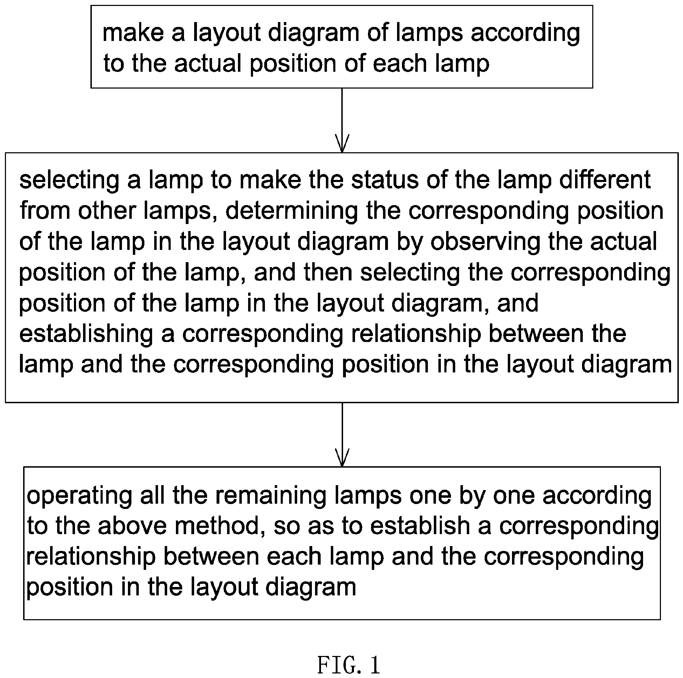

FIG.1 is a flow chart of the present invention.

### DETAILED DESCRIPTION OF THE INVENTION

the present application is illustrated by way of the following detailed description based on of the accompanying drawings. It should be noted that illustration to the embodiment in this application is not intended to limit the invention.
as shown in FIG. 1, the method for lamp position mapping of this embodiment comprises:
S1: Since the present invention uses the DALI protocol to control the lamp through a gateway supporting the DALI protocol, the first step is to scan all the lamps under the DALI gateway. According to the DALI protocol, each lamp will have a DALI address in the DALI protocol. Different lamps can be identified by different DALI addresses. When we select a lamp, we can get the DALI address of the selected lamp.
S2: According to the actual position of each lamp, the layout diagram of the lamps is made. The actual position of the lamp is the position of the lamp in reality. If lamps are set in a room, we observe the whole room from the perspective of overlooking, and then make all the lamps we observe into a layout diagram, and establish a coordinate system in the layout diagram. We generally establish the coordinate system by taking the upper left corner of the layout diagram as the origin, the downward direction as Y axis, and the right direction as X axis.
S3: Select a lamp and let it flicker, so that we can easily observe the actual position of the lamp in the room. By observing the actual position of the lamp, we can determine the corresponding position of the lamp in the layout diagram. Because the position distribution of lamps in the layout diagram is exactly the same as the actual position distribution of lamps in the room, the corresponding position in the layout diagram of lamps can be obtained as long as the actual position of lamps in the room is known, and then the corresponding position of lamps can be selected in the layout diagram. Since there is a coordinate system in the layout diagram, we can get the coordinate value (X,Y) of the corresponding position of the lamp after selecting the corresponding position of the lamp in the layout diagram, and then establish a corresponding relationship between DALI address of the lamp and the coordinate value (X,Y) of the corresponding position of the lamp in the layout diagram, that is to say, as long as we select the lamp in the layout diagram, the corresponding lamps in the real world are selected.
S4: All the other lamps are operated one by one according to the method of S3, so as to associate the DALI address of each lamp with the coordinate value (X, Y) of the corresponding position of the lamp in the layout diagram. In this way, when we need to group, set and control the lamps, we can select the corresponding lamps in reality as long as we select the lamps needed in the layout diagram, so that we can select the lamps through the layout diagrams very intuitively. It is unnecessary to select the lamp by name, which makes the selection of the lamp more convenient.

The above disclosure has been described by way of example and in terms of exemplary embodiment, and it is to be understood that the disclosure is not limited thereto. Rather, any modifications, equivalent alternatives or improvement etc. within the spirit of the invention are encompassed within the scope of the invention as set forth in the appended claims.

## Claims

1. A method for lamp position mapping, comprising:
S1: make a layout diagram of lamps according to the actual position of each lamp;
S2: selecting a lamp to make the status of the lamp different from other lamps, determining the corresponding position of the lamp in the layout diagram by observing the actual position of the lamp, and then selecting the corresponding position of the lamp in the layout diagram, and establishing a corresponding relationship between the lamp and the corresponding position in the layout diagram;
S3: operating all the remaining lamps one by one according to the method of S2, so as to establish a corresponding relationship between each lamp and the corresponding position in the layout diagram.

2. The method for lamp position mapping as claimed in claim 1, wherein the process of establishing a corresponding relationship between the lamp and the corresponding position in the layout diagram is as follows:
obtaining the DALI address of each lamp, and after selecting a lamp, obtaining the DALI address of the selected lamp;
establishing a coordinate system in the layout diagram, and selecting a corresponding position of the lamp in the layout diagram, and obtaining coordinate values of the selected corresponding position;
establishing a corresponding relationship between the DALI address of the selected lamp and the coordinate value of the corresponding position of the lamp in the layout diagram.

3. The method for lamp position mapping as claimed in claim 1 wherein the lamp is flashed when a lamp is selected.
